(19) Europäisches Patentamt
European Patent Office
Office européen des brevets

(11) **EP 2 996 907 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **14723039.5**

(22) Anmeldetag: **06.05.2014**

(51) Int Cl.:
***B60R 21/0136*** *(2006.01)*

(86) Internationale Anmeldenummer:
**PCT/EP2014/059152**

(87) Internationale Veröffentlichungsnummer:
**WO 2014/184041 (20.11.2014 Gazette 2014/47)**

(54) **VORRICHTUNG ZUR ANSTEUERUNG VON PERSONENSCHUTZMITTELN IN EINEM FAHRZEUG**

DEVICE FOR CONTROLLING PERSONAL PROTECTION MEANS IN A VEHICLE

DISPOSITIF DE COMMANDE DE MOYENS DE PROTECTION INDIVIDUELLE DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2013 DE 102013208686**

(43) Veröffentlichungstag der Anmeldung:
**23.03.2016 Patentblatt 2016/12**

(73) Patentinhaber: **Robert Bosch GmbH**
**70442 Stuttgart (DE)**

(72) Erfinder:
• **KOENIG, Simon**
**72070 Tuebingen (DE)**
• **JOHN, Dirk**
**70825 Korntal-Muenchingen (DE)**
• **AJANOVIC, Mustafa**
**71067 Sindelfingen (DE)**
• **NITSCHKE, Werner**
**71679 Asperg (DE)**
• **LANG, Gunther**
**70563 Stuttgart (DE)**

(56) Entgegenhaltungen:
| | |
|---|---|
| **EP-A2- 2 093 109** | **WO-A1-03/101786** |
| **DE-A1- 10 227 003** | **DE-A1-102004 029 373** |
| **DE-A1-102006 038 348** | **DE-A1-102008 040 590** |
| **DE-A1-102010 003 333** | **DE-B3-102005 024 319** |
| **US-A1- 2006 074 537** | **US-B1- 6 219 606** |
| **US-B1- 6 430 489** | |

EP 2 996 907 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einer Vorrichtung zur Ansteuerung von Personenschutzmitteln in einem Fahrzeug nach der Gattung des unabhängigen Patentanspruchs 1.

Die Detektion von Frontcrashs in Airbagsteuergeräten beruht in der Regel auf in Fahrzeuglängsrichtung sensierenden Beschleunigungssensoren, die beispielsweise zentral auf dem Tunnel, aber auch an Positionen an der Fahrzeugperipherie, wie am Frontend oder symmetrisch an beiden B-Säulen etc. angeordnet sind. Dabei werden in Crashs gegen harte Hindernisse (z.B. Wand) höhere Beschleunigungssignale gemessen als bei Crashs gegen weiche Hindernisse mit der gleichen Geschwindigkeit, bei denen dennoch Rückhaltemittel bzw. Personenschutzmittel aktiviert werden müssen. Daher ist es eine hohe Anforderung an Auslösealgorithmen für Personenschutzmittel, schnelle Crashs gegen weiche Hindernisse (z.B. ODB Crash, Euro-NCAP) gegen langsame Crashs auf ein hartes Hindernis, in welchen nicht ausgelöst werden soll, zu unterscheiden (z.B. AZT Versicherungstest).

Möglichkeiten zur Trennung der beiden Crashtypen ergeben sich durch zusätzliche Sensoriken, wie beispielsweise Upfront-Sensoren, in Fahrzeugquerrichtung sensierende Beschleunigungssensoren, Körperschallsensoren, vorausschauender Sensoriken oder durch die Verwendung der Fahrzeugeigengeschwindigkeit. Die Nachteile dieser Erkennungen bestehen in zusätzlichen Kosten (Sensorik) oder haben bei der Verwendung der Eigengeschwindigkeit den Nachteil, dass die Geschwindigkeit des Crashgegners nicht berücksichtigt und damit von einer falschen effektiven Crashgeschwindigkeit ausgegangen wird.

Die dabei eingesetzten Auslösealgorithmen verwenden neben dem gemessenen Beschleunigungssignal auch verarbeitete Sensorsignale. Der Sinn und Zweck dieser verarbeiteten Merkmale ist es unter anderem, neben dem aktuellen gemessenen Beschleunigungswert auch die Historie des Crashs in die Auslösemerkmale miteinzubeziehen. Solche verarbeiteten Merkmale sind beispielsweise ein erstes oder zweites Beschleunigungsintegral mit korrespondierenden Start- und Stopp-Bedingungen, welche den Geschwindigkeitsabbau bzw. die Vorverlagerung einer frei fliegenden Masse während des Crashs wiedergeben, gleitende Fensterintegrale ohne Start-Stopp Bedingung, welche den Geschwindigkeitsabbau über einen festen Zeitbereich wiedergeben, anderweitig tiefpassgefilterte Beschleunigungssignale, und/oder Integrale/Fensterintegrale über den Betrag oder ein Betragsquadrat von vorverarbeiteten Beschleunigungssignalen, welche ein Maß für die Dynamik des Signals sind. Allen diesen Merkmalen ist gemein, dass sie während des Crashverlaufs kontinuierlich berechnet werden. Der aktuelle Merkmalswert berücksichtigt damit die gesamte Historie des Crashs. Für die Crashklassifizierung und Auslöseentscheidung von Personenschutzmitteln werden nun kontinuierlich die aktuellen Merkmalswerte gegen Schwellwerte oder Merkmalskombinationen gegen Kennfelder verglichen.

In der Offenlegungsschrift DE 10 2006 038 348 A1 wird eine Vorrichtung zur Crashklassifizierung mit mindestens einer Sensoreinheit und einer Auswerte- und Steuereinheit offenbart, welche die von der mindestens einen Sensoreinheit erfasste Signale zur Crashklassifizierung auswertet. Hierbei ist die mindestens eine Sensoreinheit im mittleren Fahrzeugbereich angeordnet und die von der mindestens einen Sensoreinheit erfassten Signale werden von der Auswerte- und Steuereinheit unter Berücksichtigung von bekannten physikalischen Eigenschaften des zugehörigen Fahrzeugs ausgewertet. Die Auswerte- und Steuereinheit bestimmt mindestens zwei zeitliche Phasen im erfassten Signalverlauf und schließt auf eine erste Crashart, die beispielsweise einen Winkelcrash, einen Offsetcrash und/oder einen Pfahlcrash betrifft, wenn die Auswertung des erfassten Signalverlaufs ergibt, dass nach einer ersten zeitlichen Phase mit mindestens einer hohen Signalamplitude, die einen Aufprall eines äußeren Bereichs einer Fahrzeugfront auf ein Hindernis repräsentiert, eine zweite zeitliche Phase mit einem im Wesentlichen flachem Signalverlauf angeordnet ist.

Aus der WO 03/101786 A1 ist ein Airbagsystem bekannt, das einen Kontroller, einen entfernt angeordneten Sensor und einen auslösbaren Airbag umfasst. Die Steuerlogik zum Treffen einer Auslöseentscheidung für ein Einschlagsereignis erstellt ein Airbag-Auslösebefehl in Reaktion auf ein Signal des entfernt angeordneten Sensors. Die Logik bestimmt einen Kollisionsimpulsenergieterm, der Einschlagssignale erkennt, die sinnvoll zur Erkennung von Einschlagsereignissen auf die Seite sind.

Aus der DE 10 2010 003333 A1 ist ein Verfahren zur Bestimmung von zumindest einem Auslöseparameter eines Personenschutzmittels eines Fahrzeugs bekannt. Das Verfahren weist dabei einen Schritt des Bereitstellens von mindestens zwei Mustersignalverläufen eines möglichen Signals eines Sensors für eine physikalische Größe auf, wobei jeder der Mustersignalverläufe einen zeitlichen Verlauf der physikalischen Größe bei einem Aufprall eines Objektes auf das Fahrzeug an einer unterschiedlichen Stelle des Fahrzeugs und/oder bei einem Aufprall des Objektes unter einem unterschiedlichen Winkel auf das Fahrzeug abbildet, wobei jedem der Mustersignalverläufe zumindest ein Auslöseparameter für einen Algorithmus zur Auslösung des Personenschutzmittels zugeordnet ist. Ferner umfasst das Verfahren einen Schritt des Einlesens eines Sensorsignals, das die von einem Sensor gemessene physikalische Größe repräsentiert. Auch umfasst das Verfahren einen Schritt des Vergleichens von Werten eines zeitlichen Verlaufs des Sensorsignals mit Werten der zumindest zwei Mustersignalverläufen, wobei im Schritt des Vergleichens derjenige Mustersignalverlauf ausgewählt wird, der in zumindest einem Zeitabschnitt des Mustersignalverlaufes oder einer skalierten Form des Mustersignalverlaufes eine geringere Abweichung von dem zeitlichen Verlauf des Sensorsignals aufweist. Schließlich umfasst das Verfahren einen Schritt des Ermittelns des zumindest einen Auslöseparameters des ausgewählten Mustersignalverlaufs für den Algorithmus zur Auslösung des Personenschutzmittels.

Aus der DE 10 2004 029373 A1 ist ein Verfahren zum Unterscheiden von verschiedenen Crashsituationen, insbesondere bei verschiedenen Geschwindigkeiten, für die Ansteuerung eines Rückhaltsystems eines Fahrzeugs mit mindestens einer Steuereinrichtung für das Rückhaltesystem bekannt. Die Steuereinrichtung liefert mindestens ein Beschleunigungssignal, mit folgenden Verfahrensschritten:

Starten eines Zeitfensters bei Erkennen eines Crashbeginns;
Erstes und zweites Analysieren des Beschleunigungssignals in diesem Zeitfenster; Berücksichtigen von Werten des ersten Analysierens des Beschleunigungssignals zum Beeinflussen des zweiten Analysierens des Beschleunigungssignals und Speichern von Werten des zweiten Analysierens des Beschleunigungssignals;
Speichern von vorgegebenen zeitabhängigen ersten Sehwellwerten in diesem Zeitfenster;
Beenden des Zeitfensters gemäß einem vorgegebenen Kriterium; und Unterscheiden von verschiedenen Crashsituationen durch Vergleichen der gespeicherten Werte des zweiten Analysieren mit mindestens einem der gespeicherten ersten Sehwellwerte entsprechend dem Zeitpunkt des Zeitfensterendes sowie eine Vorrichtung für dieses Verfahren.

Aus der DE 10 2005 024319 B3 ist eine Vorrichtung zum Steuern eines Personenschutzsystems eines Fahrzeugs beschrieben, die zumindest einen Körperschallsensor zum Aufnehmen von Karosserieschwingungen und eine Auswerteeinrichtung zum Auswerten des von dem Körperschallsensor gelieferten Körperschallsignals aufweist, so dass Informationen über das Aufprallobjekt und/oder die Charakteristik des Aufpralls geliefert werden können. Die Auswerteeinrichtung ist dazu ausgebildet, das Körperschallsignal im Hinblick auf die darin enthaltenen Frequenzen zu analysieren, indem das in einem Signalabschnitt enthaltene Frequenzspektrum in eine Anzahl an Frequenzbändern aufgeteilt wird, für jedes Frequenzband die vorhandene Signalenergie ermittelt wird und eine Normierung der Signalenergie der Frequenzbänder vorgenommen wird. Ferner weist die Vorrichtung ein Personenschutzsystem auf, das in Abhängigkeit der Informationen über das Aufprallobjekt und/oder die Charakteristik des Aufpralls betätigt werden kann. Die Auswerteeinrichtung ist weiter dazu ausgebildet, bei der Normierung die Signalenergie jedes der Frequenzbänder zu der Signalenergie eines bestimmten Bezugs-Frequenzbands in Verhältnis zu setzen und die daraus resultierenden Verhältnisverläufe mit vorgegebenen Sehwellwerten zu vergleichen.

Weiteren Stand der Technik stellen die US 6,219,606 B1, US 6,430,489 B1 dar.

Offenbarung der Erfindung

Die erfindungsgemäße Vorrichtung zur Ansteuerung von Personenschutzmitteln in einem Fahrzeug mit den Merkmalen des unabhängigen Patentanspruchs 1 hat demgegenüber den Vorteil, dass Informationen über den Crashverlauf bzw. die Crashhistorie nicht über eine permanente oder ab Crashbeginn startende Merkmalsberechnung erhalten werden, sondern dass an wenigen gezielten Zeitpunkten im Crashverlauf eine rückblickende Bewertung des Crashverlaufs durchgeführt wird. Daher bleiben die Beschleunigungswerte des Crashs in einem Ringspeicher für eine hinreichend lange Zeit verfügbar. Die Merkmalsbildung über den bisherigen Crashverlauf umfasst dann nicht nur "verschmierte" Integralmerkmale, sondern erlaubt in vorteilhafter Weise auch die Erfassung ganz konkreter Signalcharakteristiken und Signalformen, welche erst im Rückblick möglich werden. Diese Signalcharakteristiken lassen sich besser mit physikalischen Crashmodellen untermauern, eignen sich daher besser zur Crashdiskriminierung und erlauben eine präzisere und robustere Aktivierung der Personenschutzsysteme, wie beispielsweise Airbags, Gurtstraffer usw.

Die permanent laufende Merkmalsberechnung in konventionellen Algorithmen hat den Nachteil, dass die Crashhistorie in diesen Merkmalen "verschmiert" wiedergegeben wird. Es sind beispielsweise viele verschiedene Beschleunigungssignalverläufe denkbar, welche in einem gewissen Zeitpunkt den gleichen Beschleunigungswert und das gleiche erste Integral aufweisen. Damit können verschiedenartige Beschleunigungsverläufe, die zu unterschiedlichen physikalischen Crashereignissen gehören, nicht voneinander getrennt werden. Dies kann eine nicht optimale Auslösung der Personenschutzsysteme zur Folge haben.

Der Kern der Erfindung besteht darin, im Signalverlauf einen oder wenige charakteristische Zeitpunkte zu detektieren. Diese Zeitpunkte werden durch unterschiedliche Phasen des Energieabbaus identifiziert. Die erste Phase des Energieabbaus ist durch die Verformung der vordersten Knautschzonenelemente wie Stoßfänger und Crashbox bestimmt. Ein günstiger erster charakteristischer Zeitpunkt ist damit das Ende des ersten Energieabbaus, welcher an einem Signaleinbruch oder durch ein hinreichend langes Plateau erkannt werden kann. Sinngemäß können weitere Phasen des Energieabbaus definiert werden. Zu einem charakteristischen Zeitpunkt werden nun aus einem Ringspeicher, welcher die Beschleunigungsdaten über eine hinreichend lange Zeitspanne speichert, rückwirkend verschiedene Merkmale des bisherigen Energieabbaus berechnet. Diese Merkmale werden bewertet und über bestimmte Merkmalskombinationen wird eine Crashklassifizierung vorgenommen und eine Auslöseentscheidung für die Personenschutzsysteme getroffen.

Die retrospektive Bewertung des ersten Energieabbaus erlaubt in vorteilhafter Weise eine Berechnung wesentlich genauerer Merkmale als die kontinuierliche Merkmalsberechnung. Darüber hinaus erlaubt sie auch die Berechnung angepasster bzw. adaptiver Merkmale, bei welchen gewisse Eigenschaften des ersten Energieabbaus in die Merkmalsberechnung einfließen können. Da diese Merkmale eine Folge eines definierten Deformationsprozesses in der Knautschzone sind, lassen sich daraus die Geschwindigkeit und der Typ eines Aufpralls, wie beispielsweise hart, weich, volle Überdeckung, Offset usw., präziser als bei konventionellen Algorithmen bestimmen. Dies ermöglicht in vorteilhafter Weise eine präzisere und robustere Crashklassifizierung.

Ausführungsformen der erfindungsgemäßen Vorrichtung zur Ansteuerung von Personenschutzmitteln in einem Fahrzeug können nicht nur zentrale in Fahrzeuglängsrichtung sensierende Beschleunigungssensoren auf dem Tunnel, sondern auch andere symmetrisch an der Fahrzeugperipherie verteilte in Fahrzeuglängsrichtung sensierende Beschleunigungssensoren auswerten. So kann beispielsweise im Bereich der B-Säule je ein Sensor an der linken und rechten Fahrzeugseite angeordnet werden. Zudem können auch in Fahrzeugquerrichtung sensierende Sensoren in die Auswertung einbezogen werden. Bei der Auswertung von mehreren Sensoren erlaubt eine getrennte Auswertung der Sensorsignale mit anschließender Merkmalsfusion eine präzisiere Crashdiskriminierung als eine Berechnung auf einem Mittelwertsignal. Eine getrennte Auswertung von in verschiedene Fahrzeugrichtungen sensierenden Beschleunigungssensoren mit anschließender Merkmalsfusion erlaubt in vorteilhafter Weise auch eine Erkennung von Winkelcrashs.

Ausführungsformen der erfindungsgemäßen Vorrichtung zur Ansteuerung von Personenschutzmitteln in einem Fahrzeug können nicht nur alleinstehend, sondern auch im Zusammenspiel mit herkömmlichen Vorrichtungen mit kontinuierlicher Merkmalsberechnung und Merkmalsbewertung eingesetzt werden.

Ausführungsformen der vorliegenden Erfindung stellen eine Vorrichtung zur Ansteuerung von Personenschutzmitteln in einem Fahrzeug mit mindestens einer Sensoreinheit, welche mindestens eine physikalische Größe erfasst, und einer Auswerte- und Steuereinheit zur Verfügung, welche aus der mindestens einen erfassten physikalischen Größe mindestens einen aufprallkennzeichnenden Signalverlauf erzeugt. Hierbei bestimmt die Auswerte- und Steuereinheit in Abhängigkeit eines Energieabbauverhaltens des Fahrzeugs im erzeugten Signalverlauf mindestens eine zeitliche Phase und wertet diese zur Crashklassifizierung und zur Auslöseentscheidung für Personenschutzmittel aus. Erfindungsgemäß bestimmt die Auswerte- und Steuereinheit mindestens einen ersten charakteristischen Zeitpunkt im Signalverlauf, welcher das Ende einer ersten zeitlichen Phase repräsentiert, und berechnet ausgehend von dem mindestens einen ersten charakteristischen Zeitpunkt rückwirkend mindestens ein Merkmal des Energieabbaus. Die Auswerte- und Steuereinheit nimmt die Crashklassifizierung und die Auslöseentscheidung für Personenschutzmittel in Abhängigkeit des mindestens einen rückwirkend berechneten Merkmals vor.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur Ansteuerung von Personenschutzmitteln in einem Fahrzeug möglich.

Besonders vorteilhaft ist, dass aus bestehenden Beschleunigungssignalen der erste markante Wechsel im Kraftniveauverlauf insbesondere auch für weiche Crashs erkannt wird. Darauf basierend ermöglichen Ausführungsformen der erfindungsgemäßen Vorrichtung zur Ansteuerung von Personenschutzmitteln in einem Fahrzeug eine zuverlässige Unterscheidung der Crashtypen hart und weich. Zudem erlauben Ausführungsformen der erfindungsgemäßen Vorrichtung zur Ansteuerung von Personenschutzmitteln in einem Fahrzeug ohne zusätzliche Sensorik (Kosten) sowie ohne Berücksichtigung von möglicherweise falschen Crashgeschwindigkeiten einen weichen Crash besser zu erkennen und die Auslöseentscheidung für die Personenschutzmittel darauf zu optimieren.

Durch die Struktur der Knautschzone des Fahrzeugs werden für Crashs verschiedene Kraftniveaus vorgegeben. Während bei Crashs gegen ein hartes Hindernis nur die eigenen Strukturen des Fahrzeugs verformt werden und ein Kraftniveauwechsel einfach zu erkennen ist, werden bei einem weichen Crash sowohl das eigene Fahrzeug als auch der Gegner verformt. Dabei wechseln sich je nach Steifigkeitsverlauf der Knautschzonen Phasen eigener Deformation mit Phasen gegnerischer Verformung ab. Die letzteren äußern sich als Plateaus im gemessenen Beschleunigungssignalverlauf. Diese Wechsel von Deformationsphasen können Ausführungsformen der erfindungsgemäßen Vorrichtung zur Ansteuerung von Personenschutzmitteln in einem Fahrzeug in vorteilhafter Weise durch Bewertung des aufprallkennzeichnenden Signalverlaufs erkennen. Durch die Unterscheidung der Crashtypen hart und weich können die Auslöseschwellen des bestehenden Auslösealgorithmus auf die niedrigeren Signalverläufe eines weichen Crashs angepasst werden. Alternativ können je nach Crashtyp hart bzw. weich verschiedene Merkmale oder Abfragekombinationen bzw. "Auslösepfade" für die Auslöseentscheidung verwendet werden.

In vorteilhafter Ausgestaltung der erfindungsgemäßen Vorrichtung ist die erste zeitliche Phase des Energieabbauverhaltens von äußeren Knautschzonenelementen des Fahrzeugs bestimmt. Die äußeren Knautschzonenelemente umfassen beispielsweise Stoßfängerquerträger und Crashboxen, welche beispielsweise zwischen dem Stoßfängerquerträger und einem Längsträger angeordnet sind.

In weiterer vorteilhafter Ausgestaltung der erfindungsgemäßen Vorrichtung zur Ansteuerung von Personenschutzmitteln in einem Fahrzeug ermittelt die Auswerte- und Steuereinheit einen lokalen Maximalwert im Signalverlauf. Die Auswerte- und Steuereinheit vergleicht den lokalen Maximalwert im Signalverlauf beispielsweise mit mindestens einem Schwellwert und kann durch den Vergleich einen harten Crash oder einen weichen Crash erkennen. Liegt der Maximalwert innerhalb der ersten Phase beispielsweise über einem einen harten Crash repräsentierenden ersten Schwellwert, dann erkennt die Auswerte- und Steuereinheit einen harten Crash. Liegt der Maximalwert innerhalb der ersten Phase über einem einen weichen Crash repräsentierenden zweiten Schwellwert aber unterhalb des ersten Schwellwerts, dann erkennt die Auswerte- und Steuereinheit einen weichen Crash.

In weiterer vorteilhafter Ausgestaltung der erfindungsgemäßen Vorrichtung bestimmt die Auswerte- und Steuereinheit den ersten charakteristischen Zeitpunkt im Signalverlauf in Abhängigkeit des lokalen Maximalwerts. Die Abhängigkeit des ersten charakteristischen Zeitpunkts kann beispielsweise durch einen zu unterschreitenden Schwellwert nach Auftreten des lokalen Maximums absolut oder relativ zum Wert des lokalen Maximums vorgegeben werden. Die Auswerte- und Steuereinheit kann den ersten charakteristischen Zeitpunkt beispielsweise über einen Signalrückgang oder einen integrierten Signalrückgang absolut oder in Bezug auf den lokalen Maximalwert bestimmen. Zudem kann eine bestimmte Zeitspanne nach oder vor dem Auftreten des lokalen Maximums zur Bestimmung des ersten charakteristischen Zeitpunkts vorgegeben werden.

Zusätzlich oder alternativ kann die Auswerte- und Steuereinheit den mindestens einen Signalverlauf unterschiedlich stark filtern und die erzeugten Filterkurven zur Ermittlung des ersten charakteristischen Zeitpunkts miteinander vergleichen. Außerdem kann die Auswerte- und Steuereinheit den ersten charakteristischen Zeitpunkt mittels einer Gradientenberechnung bestimmen.

In weiterer vorteilhafter Ausgestaltung der erfindungsgemäßen Vorrichtung kann die Auswerte- und Steuereinheit als Merkmale zur Crashklassifizierung und zur Auslöseentscheidung rückwirkend ein maximal erreichtes Kraftniveau innerhalb der ersten Phase und/oder eine innerhalb der ersten Phase abgebaute Geschwindigkeit und/oder Integrale über Teilbereiche des Signalverlaufs der ersten Phase und/oder eine zeitliche Dauer der ersten Phase und/oder eine Anstiegszeit des Signalverlaufs und/oder einen Gradienten eines Signalverlaufs der ersten Phase berechnen. Zudem kann die Auswerte- und Steuereinheit die rückwirkend für die erste Phase berechneten Merkmale und/oder Zwischengrößen zur weiteren Auswertung logisch und/oder mathematisch miteinander kombinieren und/oder verknüpfen.

In weiterer vorteilhafter Ausgestaltung der erfindungsgemäßen Vorrichtung kann die Auswerte- und Steuereinheit über einen zweiten charakteristischen Zeitpunkt im Signalverlauf, welcher das Ende der zweiten zeitlichen Phase repräsentiert, eine an die ersten Phase anschließende zweite Phase definieren. Hierbei kann die Auswerte- und Steuereinheit den zweiten charakteristischen Zeitpunkt im Signalverlauf in Abhängigkeit von einem nach dem ersten charakteristischen Zeitpunkt auftretenden lokalen Maximalwert und/oder über unterschiedliche Filterkurven und/oder mittels einer Gradientenberechnung und/oder über eine feste Zeitspanne ab dem ersten charakteristischen Zeitpunkt und/oder einen festen Geschwindigkeitsabbau ab dem ersten charakteristischen Zeitpunkt und/oder einen vorgegebenen Gesamtgeschwindigkeitsabbau bestimmen. Zudem kann die Auswerte- und Steuereinheit rückwirkend eine innerhalb der zweiten zeitlichen Phase abgebaute Geschwindigkeit und/oder ein minimales Kraftniveau innerhalb der zweiten zeitlichen Phase berechnen.

In weiterer vorteilhafter Ausgestaltung der erfindungsgemäßen Vorrichtung kann die Auswerte- und Steuereinheit die rückwirkend für die erste und zweite Phase berechneten Merkmale und/oder Zwischengrößen zur weiteren Auswertung logisch und/oder mathematisch miteinander kombinieren und/oder verknüpfen.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt ein schematisches Blockdiagram eines Ausführungsbeispiels einer erfindungsgemäßen Vorrichtung zur Ansteuerung von Personenschutzmitteln in einem Fahrzeug.

Fig. 2 zeigt eine schematische Darstellung eines aufprallkennzeichnenden Signalverlaufs, welcher von der erfindungsgemäßen Vorrichtung zur Ansteuerung von Personenschutzmitteln in einem Fahrzeug aus Fig. 1 erzeugt und ausgewertet wird.

Fig. 3 zeigt eine schematische Darstellung eines aufprallkennzeichnenden Signalverlaufs bei einem harten Crash, welcher von einer herkömmlichen Vorrichtung zur Ansteuerung von Personenschutzmitteln in einem Fahrzeug erzeugt und ausgewertet wird.

Fig. 4 zeigt eine schematische Darstellung eines aufprallkennzeichnenden Signalverlaufs bei einem weichen Crash, welcher von einer herkömmlichen Vorrichtung zur Ansteuerung von Personenschutzmitteln in einem Fahrzeug erzeugt und ausgewertet wird.

Fig. 5 zeigt eine schematische Darstellung eines aufprallkennzeichnenden Signalverlaufs bei einem harten Crash, welcher von der erfindungsgemäßen Vorrichtung zur Ansteuerung von Personenschutzmitteln in einem Fahrzeug aus Fig. 1 erzeugt und ausgewertet wird.

Fig. 6 zeigt eine schematische Darstellung eines aufprallkennzeichnenden Signalverlaufs bei einem weichen Crash, welcher von der erfindungsgemäßen Vorrichtung zur Ansteuerung von Personenschutzmitteln in einem Fahrzeug aus Fig. 1 erzeugt und ausgewertet wird.

Fig. 7 zeigt eine schematische Darstellung eines Auslösepfads der erfindungsgemäßen Vorrichtung zur Ansteuerung von Personenschutzmitteln in einem Fahrzeug aus Fig. 1.

Fig. 8 zeigt eine schematische Darstellung eines aufprallkennzeichnenden Signalverlaufs, bei welchem die erfindungsgemäße Vorrichtung zur Ansteuerung von Personenschutzmitteln in einem Fahrzeug aus Fig. 1 einen Wechsel der Deformationsphase über den Signalrückgang erkennt.

Fig. 9 zeigt eine schematische Darstellung eines aufprallkennzeichnenden Signalverlaufs, bei welchem die erfindungsgemäße Vorrichtung zur Ansteuerung von Personenschutzmitteln in einem Fahrzeug aus Fig. 1 einen Wechsel der Deformationsphase über den integrierten Signalrückgang erkennt.

Fig. 10 zeigt eine schematische Darstellung von zwei Filterkurven eines aufprallkennzeichnenden Signalverlaufs, bei welchem die erfindungsgemäße Vorrichtung zur Ansteuerung von Personenschutzmitteln in einem Fahrzeug aus Fig. 1 einen Wechsel der Deformationsphase über einen Filtervergleich erkennt.

Fig. 11 zeigt eine schematische Darstellung eines aufprallkennzeichnenden Signalverlaufs, bei welchem die erfindungsgemäße Vorrichtung zur Ansteuerung von Personenschutzmitteln in einem Fahrzeug aus Fig. 1 einen Wechsel der Deformationsphase über die Gradientenmethode erkennt.

Ausführungsformen der Erfindung

Knautschzonen von Fahrzeugen sind in der Regel so aufgebaut, dass sie unterschiedliche Kraftniveaus besitzen. Dabei weisen die vordersten Strukturen der Knautschzone das geringste Kraftniveau auf, und die hinteren Strukturen zeigen das höchste Kraftniveau. Beim Verformen der Knautschzone wechseln damit das Kraftniveau und die gemessene Beschleunigung. Bei Crashs gegen ein hartes Hindernis, bei welchen nur die eigenen Strukturen verformt werden, zeigt sich zwischen dem Wechsel der Kraftniveaus immer ein Krafteinbruch durch die plastische Deformation der gerade verformten Struktur. Bei einem weichen Crash werden sowohl das eigene Fahrzeug als auch das gegnerische Fahrzeug verformt. Dabei wechseln sich je nach Steifigkeitsverlauf der Knautschzonen Phasen eigener Deformation mit Phasen gegnerischer Verformung ab. Beim Übergang von der eigenen Verformung auf die Verformung des Gegners fällt das erreichte Kraftniveau häufig etwas ab, und bleibt dann in der Phase der gegnerischen Verformung auf einem recht konstanten Niveau (Plateau).

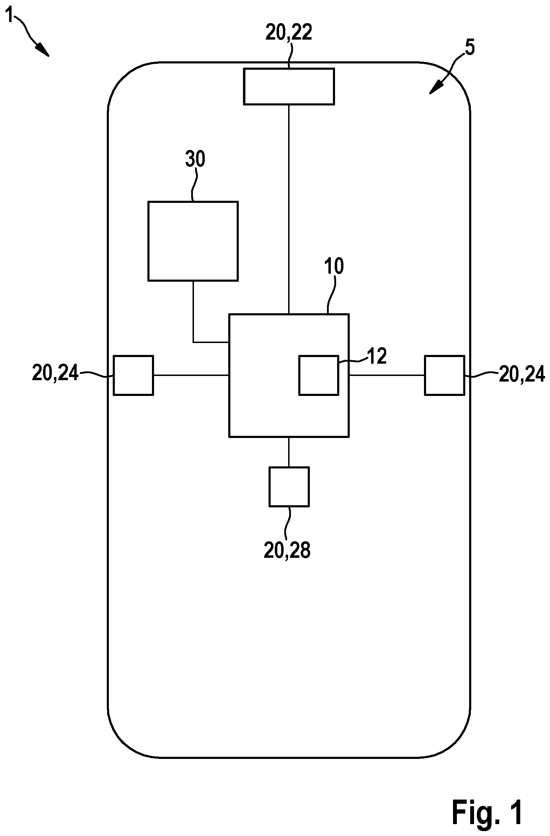

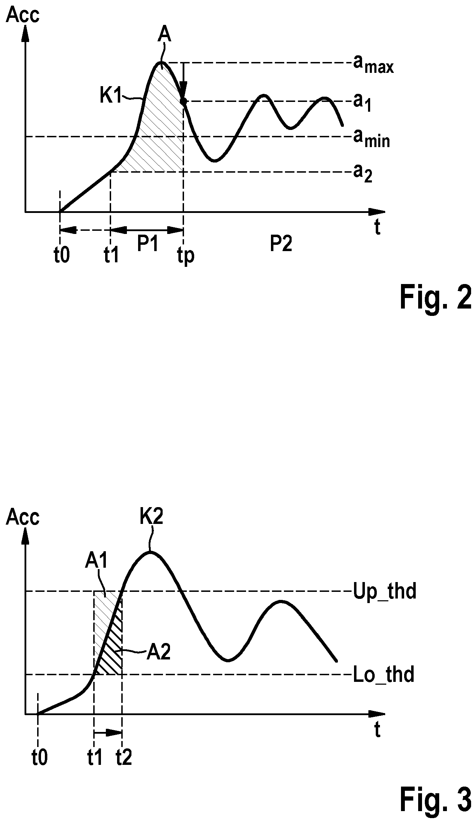

Wie aus Fig. 1 und 2 ersichtlich ist, umfasst das dargestellte Ausführungsbeispiel einer erfindungsgemäßen Vorrichtung 5 zur Ansteuerung von Personenschutzmitteln 30 in einem Fahrzeug 1 mindestens eine Sensoreinheit 20, 22, 24, 26, 28, welche mindestens eine physikalische Größe erfasst, und eine Auswerte- und Steuereinheit 10, welche aus der mindestens einen erfassten physikalischen Größe mindestens einen aufprallkennzeichnenden Signalverlauf Acc erzeugt. Die Auswerte- und Steuereinheit 10 bestimmt in Abhängigkeit eines Energieabbauverhaltens des Fahrzeugs 1 im erzeugten Signalverlauf Acc mindestens eine zeitliche Phase P1, P2 und wertet diese zur Crashklassifizierung und zur Auslöseentscheidung für die Personenschutzmittel 30 aus.

Erfindungsgemäß bestimmt die Auswerte- und Steuereinheit 10 mindestens einen ersten charakteristischen Zeitpunkt tp im Signalverlauf Acc, welcher das Ende einer ersten zeitlichen Phase P1 repräsentiert, und berechnet ausgehend von dem mindestens einen ersten charakteristischen Zeitpunkt tp rückwirkend mindestens ein Merkmal $a_{max}$, $a_{min}$, A, t2-t1, tp-t1, des Energieabbaus. Die Auswerte- und Steuereinheit 10 nimmt die Crashklassifizierung und die Auslöseentscheidung für Personenschutzmittel 30 in Abhängigkeit des mindestens einen rückwirkend berechneten Merkmals $a_{max}$, $a_{min}$, A, t2-t1, tp-t1 vor. Im dargestellten Ausführungsbeispiel sind vier Sensoreinheiten 20, 22, 24, 26, 28 vorgesehen, von welchen eine erste Sensoreinheit 22 im Fahrzeugfrontbereich, eine zweite und dritte Sensoreinheit 24, 26 im seitlichen Fahrzeugbereich und eine vierte Sensoreinheit 28 zentral im Fahrzeug 1 angeordnet sind. Die Sensoreinheiten 20, 22, 24, 26, 28 umfassen beispielsweise Beschleunigungssensoren, welche Beschleunigungen in mindestens eine vorgegebene Raumrichtung, wie beispielsweise eine Fahrzeuglängsrichtung, eine Fahrzeughochrichtung oder eine Fahrzeugquerrichtung, erfassen.

Zur Bewertung des Crashverlaufs ist es sinnvoll, das von einem Beschleunigungssensor ermittelte Signal geeignet zu filtern, um Resonanzen, Rauschen und andere unerwünschte Effekte aus dem gemessenen Signal zu entfernen. Dieses verbleibende Kernsignal spiegelt dann die während des Crashs ablaufenden "makroskopischen" Deformationsvorgänge in der Knautschzone des Fahrzeugs 1 wieder. Die Auswerte- und Steuereinheit 10 umfasst im dargestellten Ausführungsbeispiel mindestens einen internen Ringspeicher 12, um die von den Sensoreinheiten 20, 22, 24, 26, 28 erfassten Signale zur Auswertung für ausreichende Zeitdauer zu speichern. Alternativ kann der mindestens eine Ringspeicher 12 auch außerhalb der Auswerte- und Steuereinheit 10, beispielsweise in den einzelnen Sensoreinheiten 20, 22, 24, 26, 28 angeordnet werden.

Für die Definition des ersten charakteristischen Zeitpunkts tp bietet sich insbesondere der erste Energieabbau an, welcher beispielsweise im Stoßfängerquerträger und in Crashboxen erfolgt. Dieser ist wegen seiner guten Reproduzierbarkeit geeignet, um daraus Rückschlüsse auf Crashtyp und Crashgeschwindigkeit ziehen zu können, zumal auch die geforderten Auslösezeiten zeitlich in diesen Bereich fallen, und nicht eine Deformation dahinterliegender Strukturen, wie beispielsweise der Längsträger abgewartet werden kann.

Jeder Deformationsvorgang ist charakterisiert durch eine Abfolge von elastischer Deformation, plastischer Deformation und anschließendem Abriss bzw. Abknicken. Daher wird der charakteristische erste Energieabbau beispielsweise daran erkannt, dass ein gewisses Mindestkraftniveau $a_{min}$, wie es für Stoßfängerquerträger und Crashboxen typisch ist, überschritten wurde und anschließend ein genügend tiefer Einbruch des Signals erfolgt ist. Dieser Einbruch kann entweder absolut oder in Relation zum erreichten maximalen Kraftniveau $a_{max}$ bewertet werden. Wie aus Fig. 2 weiter ersichtlich ist, kann beispielsweise ein Einbruch um 25% (d.h. auf 75%) bezogen auf das erreichte Maximum $a_{max}$ als erster Schwellwert $a_1$ zur Festlegung des ersten charakteristischen Zeitpunkts tp berechnet werden. Die präzisen Werte für das Mindestkraftniveau $a_{min}$ und dem geforderten (relativen) Signaleinbruch $a_1$ sind besonders vorteilhaft als einstellbare Parameter vorgehalten.

Als erste Phase P1 des Energieabbaus wird dann der Zeitbereich ab Crashbeginn t0 bis zum detektierten Krafteinbruch zum Zeitpunkt tp bezeichnet. Alternativ können auch die kleinen Signale unmittelbar zu Crashbeginn ausgeschlossen werden und die erste Phase P1 des Energieabbaus kann erst ab einem Zeitpunkt t1 begonnen werden, an dem der Signalverlauf K1 einen vorgegebenen zweiten Schwellwert $a_2$ erreicht. Dieser zweite Schwellwert $a_2$ kann analog zum ersten Schwellwert $a_1$ absolut oder in Relation zum erreichten Maximum $a_{max}$ der ersten Phase P1 des Energieabbaus gemessen werden. In Fig. 2 wurde beispielsweise eine relative Schwelle von 25% des erreichten Maximums $a_{max}$ als Beginn für diese erste Phase P1 gewählt.

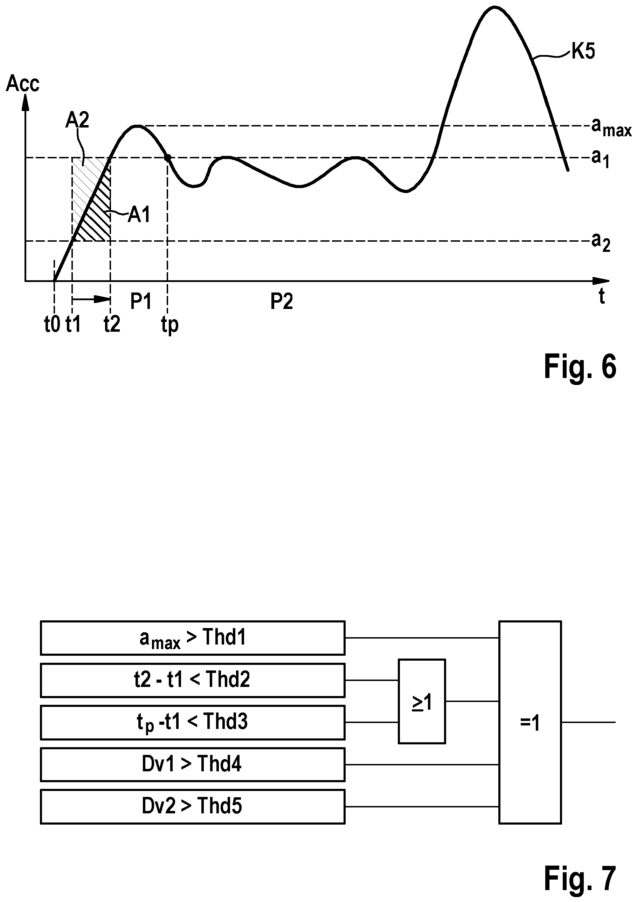

Alternativ sind weitere Methoden denkbar, um die erste Phase P1 des Energieabbaus und damit den ersten charakteristischen Zeitpunkt tp im Crashverlauf zu erkennen. Nachfolgend werden unter Bezugnahme auf Fig. 7 bis 10 weitere Methoden zur Erkennung des ersten charakteristischen Zeitpunkts tp beschrieben.

Aus der ersten Phase P1 des Energieabbaus lassen sich nun einige physikalische Merkmale ableiten, welche charakteristisch für den abgelaufenen Deformationsvorgang sind und daher Rückschlüsse auf den Crashtyp und die Crashgeschwindigkeit zulassen. So können beispielsweise das Maximum $a_{max}$ der erfassten Beschleunigung, welches das erreichte Kraftniveau in der Knautschzone repräsentiert, und/oder ein Integral über die Beschleunigungswerte der ersten Phase P1, welches die abgebaute Geschwindigkeit Dv1 repräsentiert, und/oder ein Integral über Teilbereiche A, A1, A2 des ersten Energieabbaus und/oder zeitliche Dauer (tp-t1) bzw. Breite der ersten Phase P1 des ersten Energieabbaus und/oder Anstiegszeit (t2-t1) und/oder Gradient G und/oder Signalform des ersten Energieabbaus und/oder eine Kombinationen dieser Merkmale, wie beispielsweise Verhältnisse der einzelnen Merkmale zueinander usw. berechnet und zur Bewertung herangezogen werden.

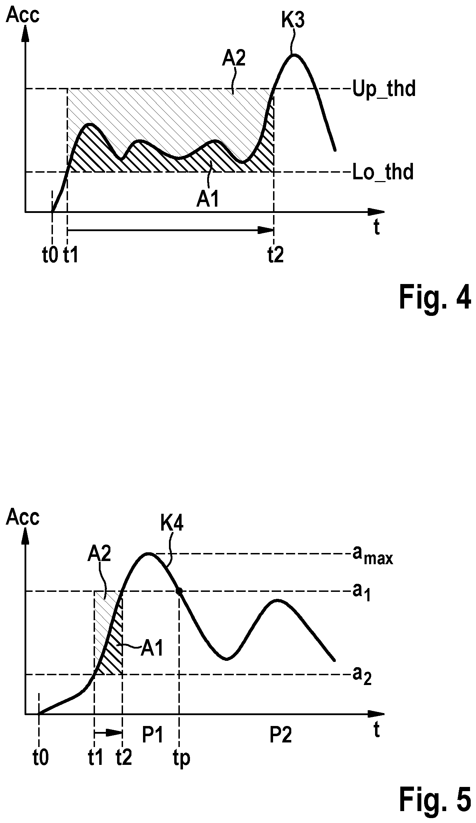

In Fig. 3 und 4 ist jeweils eine herkömmliche Ermittlung einer Anstiegszeit (t2-t1) dargestellt. Hierzu wird die Dauer (t2 -t1) ermittelt, welche das geeignet gefilterte Beschleunigungssignal K2, K3 benötigt, um von einer festen unteren Schwelle Lo_thd auf eine feste obere Schwelle Up_thd anzusteigen. Die untere Schwelle Lo_thd kann häufig auch mit der Startschwelle des Algorithmus gleichgesetzt werden. Die Dauer (t2 -t1) kann entweder direkt über einen Zeitzähler oder indirekt über eine erste Fläche A1 zwischen dem Beschleunigungssignal K2, K3 und der unteren Schwelle Lo_thd oder über eine zweite Fläche A2 zwischen der oberen Schwelle Up_thd und dem Beschleunigungssignal K2, K3 ermittelt werden.

Diese Methode ist in Fig. 3 schematisch am Beispiel eines ersten Signalverlaufs K2, welcher einen Crash gegen eine harte Wand repräsentiert, und in Fig. 4 am Beispiel eines zweiten Signalverlaufs K3 dargestellt, welcher einen Crash in ein weiches Hindernis repräsentiert. Die Schwellwerte Up_thd, Lo_thd wurden dabei für die korrekte Ausmessung des Anstiegs des harten Crashs platziert. Da diese Schwellwerte Up_thd, Lo_thd nun aber fest sind, liegen sie zur Anstiegsbewertung für den weichen Crash ungünstig: Dieser zeigt initial zwar ebenso einen steilen Anstieg, durch das Nachgeben der weichen Barriere entsteht dann aber ein Plateau im Kraftverlauf K3. Die Bewertung gegen feste Schwellen liefert beim weichen Crash daher eine wesentlich größere Anstiegszeit und ist daher kein geeignetes Maß zur Bewertung der Crashgeschwindigkeit bzw. Crashschwere.

In Fig. 5 ist dagegen eine retrospektive und adaptive Ermittlung der Anstiegszeit (t2 - t1) aus dem Signalverlauf K4 dargestellt. Hierzu muss zunächst das Ende der ersten Phase P1 des Energieabbaus zum ersten charakteristischen Zeitpunkt tp abgewartet werden. Ist dies erfolgt, kann die Anstiegsbewertung rückwirkend und mit angepassten Schwellwerten $a_1$, $a_2$ erfolgen. Besonders vorteilhaft ist es hier, den unteren Schwellwert $a_2$ und den oberen Schwellwert $a_1$ in Relation zum erreichten Maximum $a_{max}$ der ersten Phase P1 des Energieabbaus zu wählen. So kann beispielsweise die Zeitdauer (t2 - t1) des Anstiegs des Signalverlaufs K4 von 25% auf 75% des Maximums $a_{max}$ bestimmt werden, so dass der obere bzw. erste Schwellwert $a_1$ mit dem Schwellwert identisch ist, welcher den ersten charakteristischen Zeitpunkt tp repräsentiert. Die präzisen prozentualen Werte für die Schwellwerte $a_1$, $a_2$, $a_{min}$ sind besonders vorteilhaft als einstellbare Parameter vorgehalten.

Mit dieser auf die ersten Phase P1 des Energieabbaus angepassten Merkmalsauswahl kann nun auch für den in Fig. 6 dargestellten Signalverlauf K6 eines weichen Crashs, der schnelle Beschleunigungsanstieg durch eine auf ein erstes lokales Maximum $a_{max}$ des Signalverlaufs bezogene ermittelte kurze Anstiegszeit (t2 - t1) korrekt erfasst werden. Die Anstiegszeit (t2 - t1) kann wiederum direkt mit einem Zeitzähler oder indirekt über die Berechnung der schraffierten Flächen A1, A2 ermittelt werden. Da die Schwellwerte $a_1$, $a_2$ selbst mit dem erreichten lokalen Maximum $a_{max}$ des Signalverlaufs K5 skaliert sind, werden diese Flächen A1, A2 dann zur korrekten Zeitermittlung sinnvollerweise ebenfalls mit dem Wert des lokalen Maximums $a_{max}$ normiert.

Aus der so bestimmten Anstiegszeit (t2 - t1) kann nun der Gradient G durch einfache Quotientenbildung gemäß Gleichung (G1) ermittelt werden.

$$G = delta\_a / (t2 - t1) \qquad\qquad (G1)$$

Für das dargestellte Ausführungsbeispiel ergibt sich:

$$G = (0{,}75 * a_{max} - 0{,}25 * a_{max})/(t2\text{-}t1) = a_{max} / (2 * (t2\text{-}t1))$$

Für einige Crashtypen (z.B. ODBs) liegt die geforderte Auslösezeit später als der erste charakteristische Zeitpunkt tp am Ende der ersten Phase P1 des Energieabbaus. Daher macht es für eine präzise und robuste Auslöseentscheidung Sinn, den für eine rechtzeitige Crashklassifikation noch zur Verfügung stehenden Zeitraum für eine weitere Auswertung zu nutzen.

Diese zweite Phase P2 des Energieabbaus kann auf verschiedenste Arten definiert werden. Beispielsweise kann die Erkennung eines zweiten charakteristischen Zeitpunkts, welcher das Ende der zweiten Phase P2 des Energieabbaus repräsentiert, ähnlich zur oben beschriebenen Erkennung des ersten charakteristischen Zeitpunkts tp am Ende der ersten Phase P1 des Energieabbaus erfolgen und/oder durch eine feste Zeitspanne ab dem ersten charakteristischen Zeitpunkt tp am Ende der ersten Phase P1 und/oder durch einen festen Geschwindigkeitsabbau Dv2 ab dem ersten charakteristischen Zeitpunkt tp am Ende der ersten Phase P1. Alternativ kann abgewartet werden, bis im Crashverlauf insgesamt ein gewisser Gesamtgeschwindigkeitsabbau Dv erreicht wurde. In diesem Fall dauert bei Crashs, welche während der ersten Phase P1 einen starken Geschwindigkeitsabbau Dv1 erfahren haben, die zweite Phase P2 entsprechend kürzer und umgekehrt.

Als Merkmale für den Energieabbau in der zweiten Phase P2 können beispielsweise ähnliche Merkmale wie für die erste Phase P1 des Energieabbaus berechnet werden. So kann beispielsweise während der zweiten Phase P2 die erfasste Beschleunigung aufsummiert und der Geschwindigkeitsabbau Dv2 für die zweite Phase P2 berechnet werden. Zudem kann ein Beschleunigungsminimum $a_{min}$ während der zweiten Phase P2 bestimmt werden.

Darüber hinaus lassen sich auch Merkmale generieren, welche die erste Phase P1 und die zweite Phase P2 zusammen bewerten. Insbesondere die Verhältnisse bzw. Quotienten entsprechender Teilmerkmale lassen Rückschlüsse über die Gleichmäßigkeit des Beschleunigungsverlaufs zu. So können beispielsweise das Verhältnis des Geschwindigkeitsabbaus Dv2 in der zweiten Phase P2 zum Geschwindigkeitsabbau Dv1 in der ersten Phase P1 und/oder das Verhältnis des Geschwindigkeitsabbaus Dv2 in der zweiten Phase P2 zum Gesamtgeschwindigkeitsabbau Dv und/oder das Verhältnis des Beschleunigungsmaximums $a_{max}$ in der zweiten Phase P2 zum Beschleunigungsmaximum $a_{max}$ in der ersten Phase P1 und/oder das Verhältnis der mittleren Beschleunigung in der zweiten Phase P2 zur mittleren Beschleunigung in der ersten Phase P1 und/oder das Verhältnis der mittleren Beschleunigung in der zweiten Phase P2 zum Beschleunigungsmaximum $a_{max}$ in der ersten Phase P1 und/oder das Verhältnis des Beschleunigungsminimums $a_{min}$ in der zweiten Phase P2 zum Beschleunigungsmaximum $a_{max}$ in der ersten Phase P1 und/oder das Verhältnis der Differenz zwischen Beschleunigungsmaximums $a_{max}$ in der ersten Phase P1 und Beschleunigungsminimum $a_{min}$ in der zweiten Phase P2 und dem Beschleunigungsmaximum $a_{max}$ in der ersten Phase P1 als Merkmale berechnet und zur Crashklassifizierung und zur Auslöseentscheidung ausgewertet werden. Analog können noch weitere Crashphasen definiert werden.

Zur Crashdiskriminierung können alle beschriebenen Merkmale eingesetzt werden. Am geeignetsten ist es, eine Kombination von Merkmalen zu bewerten, um damit einzelne Crashtypen präzise erkennen zu können. Beispielsweise unterscheiden sich harte Crashs mit einer 100% Überdeckung und mit Geschwindigkeiten, welcher größer als 20 km/h sind, durch hohe Werte im Beschleunigungsmaximum $a_{max}$, durch kleine Werte in der Anstiegszeit (t2 - t1) und durch kleine Werte in der Dauer (t2 - t1) der ersten Phase P1 des Energieabbaus von Nichtauslösesituationen. Offsetcrashs in ein weiches Hindernis (ODB) unterscheiden sich von Nichtauslösesituationen beispielsweise durch kleine Werte in der Anstiegszeit (t2 - t1) der ersten Phase P1 des Energieabbaus, durch kleine Werte im Minimum der zweiten Phase P2 des Energieabbaus und durch einen hohen Wert im Verhältnis vom Geschwindigkeitsabbau Dv2 in der zweiten Phase P2 zum Geschwindigkeitsabbau Dv1 in der ersten Phase P1. Daher bietet es sich an, charakteristische Crashtypen in so genannte Auslösepfade zusammenzufassen, welche verschiedene ermittelte Merkmale gegen Schwellwerte vergleichen. Die Ergebnisse der Merkmalsabfragen können dann logisch verknüpft werden. Ein Beispiel für einen solchen Auslösepfad ist in Fig. 7 dargestellt.

Für alle oben beschriebenen Merkmale, welche durch Verhältnisse bzw. Quotienten dargestellt sind, kann die Division auch umgangen werden, indem im Zuge des Schwellwertvergleichs (Merkmal = Zähler / Nenner > Schwelle ?) der Nenner auf die Schwellwertseite multipliziert wird, d.h. die Schwellwertabfrage in der Form (Zähler > Schwellwert * Nenner?) durchgeführt wird, oder der Schwellwert anderweitig als Funktion des Nenners variiert wird.

Der Ausgang eines solchen Auslösepfades kann nun direkt oder indirekt für eine Ansteuerung von Personenschutzmitteln 30 verwendet werden. Eine indirekte Ansteuerung umfasst dabei beispielsweise eine Verzögerung der Auslösung für gewisse Crashtypen, für welche die geforderte Auslösezeit zum Berechnungszeitpunkt noch nicht erreicht ist, und/oder eine Kombination mit Merkmalen eines herkömmlichen, mit kontinuierlich berechneten Merkmalen arbeitenden Algorithmus. Diese Kombination kann beispielsweise durch eine logische UND-Verknüpfung und/oder durch eine Schwellwertanpassung im herkömmlichen Algorithmus auf Basis der Ergebnisse der erfindungsgemäßen Merkmalsberechnung erfolgen.

Wie aus Fig. 7 ersichtlich ist, wird im dargestellten Auslösepfad als erstes Merkmal überprüft, ob das ermittelte lokale Maximum $a_{max}$ größer als ein erster Schwellwert Thd1 ist. Als zweites Merkmal wird überprüft, ob die Anstiegszeit (t2 - t1) kleiner als ein zweiter Schwellwert Thd2 ist. Als drittes Merkmal wird überprüft ob die Dauer (tp - t1) der ersten Phase P1 kürzer als ein dritter Schwellwert Thd3 ist. Als viertes Merkmal werden das zweite und dritte Merkmal mittels einer logischen ODER-Funktion miteinander verknüpft. Als fünftes Merkmal wird überprüft, ob der Geschwindigkeitsabbau Dv1 während der ersten Phase P1 größer als ein vierter Schwellwert Thd4 ist. Als sechstes Merkmal wird überprüft, ob der Geschwindigkeitsabbau Dv2 während der zweiten Phase P2 größer als ein fünfter Schwellwert Thd5 ist. Zur Erzeugung eines Auslösesignals für die Personenschutzmittel werden im dargestellten Ausführungsbeispiel des Auslösepfads das erste Merkmal, das vierte Merkmal, das fünfte Merkmal und das sechste Merkmal mittels einer logischen UND-Funktion miteinander verknüpft, so dass das Auslösesignal nur erzeugt wird, wenn die über die logische UND-Funktion verknüpften Merkmale wahr sind.

Wie oben bereits ausgeführt ist, kann der Wechsel der Kraftniveaus bei einem harten Crash einfach durch einen hinreichend großen Signaleinbruch erkannt werden. Bei einem weichen Crash greifen die bisher beschriebenen Maßnahmen nur teilweise, da der Krafteinbruch nicht immer deutlich genug ist, sondern häufig ein Kraftplateau entsteht. Daher werden im Folgenden einige weitere Methoden zur Erkennung dieses Wechsels von Deformationsphasen beschrieben.

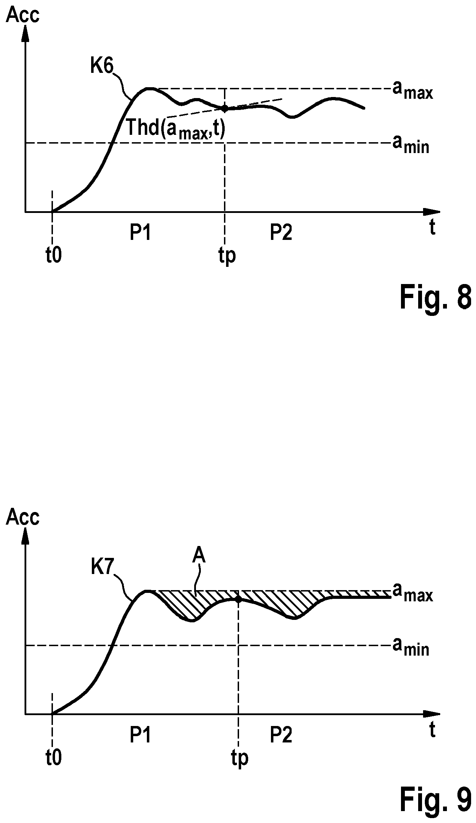

Wie aus Fig. 8 ersichtlich ist, basiert eine erste Erkennung darauf, den Signalrückgang im dargestellten Signalverlauf K6 bezogen auf das Maximum $a_{max}$ absolut, d.h. $a_{max} - a$, oder relativ, d.h. $(a_{max} - a) / a_{max}$ mit einer Schwelle $Thd(a_{max}, t)$ zu vergleichen. Ein Wechsel wird erkannt, wenn der Signalverlauf K6, welcher beispielsweise die erfasste Beschleunigung repräsentiert, unter eine auf das Maximum $a_{max}$ bezogene, zeitabhängige Schwelle abfällt. Diese Schwelle $Thd(a_{max}, t)$ wird in geeigneter Weise mit zunehmender Zeit seit Erreichen des Maximums $a_{max}$ angehoben, um damit eine Erkennung zu ermöglichen. D.h. ein Wechsel der Deformationsphase wird erkannt, falls die erste Ungleichung (U1)

$$(a_{max} - a) > g(t) \qquad\qquad (U1)$$

oder die zweite Ungleichung (U2) erfüllt ist.

$$(a_{max} - a) / a_{max} > f(t) \qquad\qquad (U2)$$

Die zweite Ungleichung (U2), welche den relativen Signalrückgang bewertet, kann auch zur dritten Ungleichung (U3) umgeformt werden.

$$(a_{max} - a) > f(t) * a_{max} \qquad\qquad (U3)$$

Aus der dritten Ungleichung (U3) ergibt sich die verallgemeinerte Form gemäß der vierten Ungleichung (U4).

$$(a_{max} - a) > F(a_{max}, t) \qquad\qquad (U4)$$

Demnach wird ein Wechsel der Deformationsphasen und der erste charakteristische Zeitpunkt tp erkannt, falls der Signalrückgang eine Schwelle $F(a_{max}, t)$ übersteigt, die vom erreichten Maximum $a_{max}$ und von der Zeit t seit Erreichen des Maximums $a_{max}$ abhängig ist. Zur besseren Visualisierung in Fig. 8 ist die vierte Ungleichung (U4) in die fünfte Ungleichung (U5) umgeformt.

$$a < (a_{max} - F(a_{max}, t)) = Thd(a_{max}, t) \qquad\qquad (U5)$$

D.h. die Beschleunigung a muss unter eine Schwelle $Thd(a_{max}, t)$ abfallen, welche vom erreichten Maximum $a_{max}$ sowie von der Zeit t seit Erreichen des Maximums $a_{max}$ abhängig ist. Typischerweise wird die Schwelle $Thd(a_{max}, t)$ mit steigendem Maximum $a_{max}$ und steigender Zeit t zunehmen. Anstelle der Zeit t seit Erreichen des Maximums $a_{max}$ kann der Schwellwert $Thd(a_{max}, t)$ auch mit anderen im Crashverlauf ansteigenden Merkmalen variiert werden, z.B. dem ersten oder zweiten Integral der Beschleunigung.

Anstelle des Maximums $a_{max}$ kann der Schwellwert in den Ungleichungen (U4) und (U5) auch mit einem anderen mit der "Signalstärke" des bisherigen Signalverlaufs K6 skalierenden Merkmals variiert werden, z.B. mit einer mittleren Beschleunigung.

Wie aus Fig. 9 ersichtlich ist, basiert eine zweite Erkennung auf einem integrierten Signalrückgang des Signalverlaufs K7. In dieser Variante wird nicht nur der aktuelle Wert des Signalrückgangs ($a_{max}$ - a) des Signalverlaufs K7, sondern dessen Integral A bewertet. Ein Wechsel der Deformationsphase kann beispielsweise erkannt werden, wenn die aufsummierte Signaldifferenz ($a_{max}$ - a) einen gewissen Schwellwert übersteigt. Dies ist im dargestellten Ausführungsbeispiel am ersten charakteristischen Zeitpunkt tp der Fall. Die Aufsummierung kann dabei über einen beliebig langen Zeitraum oder gefenstert aus dem Ringspeicher 12 der Auswerte- und Steuereinheit 10 erfolgen. Am geeignetsten wird auch dieser Schwellwert relativ zum erreichten Signalmaximum variiert, d.h. die Wechselerkennung ergibt sich durch die sechste Ungleichung (U6).

$$\sum (a_{max} - a_i) > factor \cdot a_{max} \qquad\qquad (U6)$$

Anstelle mit dem Maximum $a_{max}$ kann der Schwellwert auch bezogen auf ein anderes Signalstärkemaß des bisherigen Signalverlaufs K7, beispielsweise die mittlere Beschleunigung oder die integrierte Beschleunigung, skaliert werden.

In der allgemeinsten Form ergibt sich diese Erkennung daher aus der siebten Ungleichung (U7).

$$\sum (a_{max} - a_i) > F(\{a_i\}) \qquad\qquad (U7)$$

Hierbei umfasst der Ausdruck $\{a_i\}$ alle Beschleunigungswerte seit Ereignisbeginn bzw. daraus abgeleitete Merkmale.

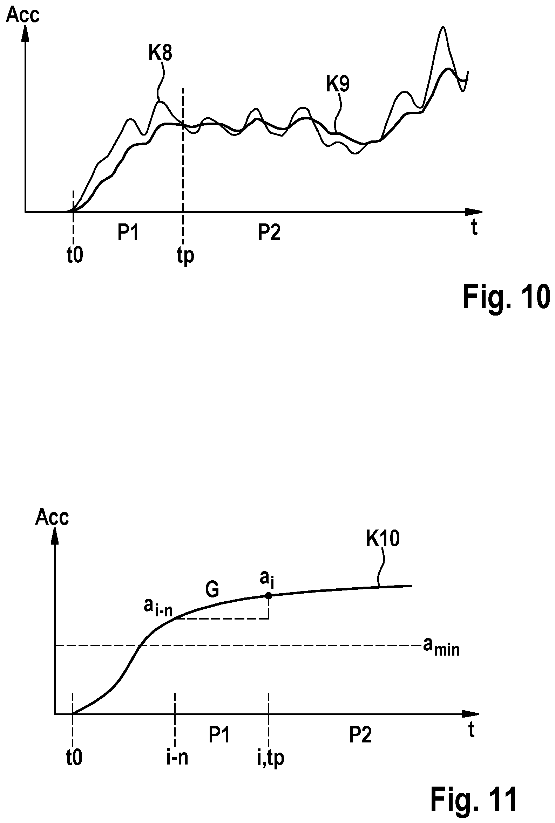

Wie aus Fig. 10 ersichtlich ist, basiert eine dritte Erkennung auf einem Filtervergleich. Die dritte Erkennung eines Kraftniveauwechsels besteht darin, unterschiedlich stark gefilterte Beschleunigungswerte zu vergleichen. In Fig. 10 repräsentiert ein erster Signalverlauf K8 eine erste Filterkurve und ein zweiter Signalverlauf K9 repräsentiert eine zweite Filterkurve. Die Filterung kann dabei über übliche Tiefpassfilter oder auch über Fensterintegrale unterschiedlicher Länge mit Normierung auf die Fensterlänge erfolgen. Der Zeitpunkt, an welchem das stärker gefilterte Signal des zweiten Signalverlaufs K9 den Wert des schwächer gefilterten Signals des ersten Signalverlaufs K8 erreicht oder übersteigt, entspricht dem ersten charakteristischen Zeitpunkt tp.

Ein schwach gefiltertes Signal mit einer kurzen Gedächtniszeit wird auf den Signalanstieg bei Crashbeginn schneller reagieren als ein stärker gefiltertes Signal mit einer längeren Gedächtniszeit. Wenn nun aber im Crashverlauf das stärker gefilterte Signal das schwächer gefilterte Signal erreicht, bedeutet dies, dass die beiden gefilterten Signale in ihrer jeweiligen "Gedächtniszeit" einen gleich hohen mittleren Wert aufweisen. Dies ist ein Indiz für eine konstante Beschleunigung bzw. ein Kraftplateau. Wie aus Fig. 10 weiter ersichtlich ist, weisen die beiden Signalverläufe K8, K9 am ersten charakteristischen Zeitpunkt tp einen gleich hohen mittleren Wert auf. Die achte Ungleichung (U8) zeigt eine mögliche einfache Abfrage.

$$a_{K9} >= a_{K8} \qquad\qquad\qquad (U8)$$

Hierbei repräsentiert $a_{K8}$ Werte des ersten Signalverlaufs K8 und $a_{K9}$ repräsentiert Werte des zweiten Signalverlaufs K9. Selbstverständlich sind hier auch komplexere Kriterien denkbar. So kann es beispielsweise auch genügen, wenn das stärker gefilterte Signal dem schwächer gefilterten für einige Zyklen hintereinander genügend nahe kommt, o.ä.

Wie aus Fig. 11 ersichtlich ist, basiert eine vierte Erkennung auf einer Gradientenmethode. Diese Methode beruht darauf, einen sehr kleinen Signalanstieg bzw. Gradienten G des Signalverlaufs K10 zu detektieren. Am geeignetsten wird dieser Gradient G über mehrere Zyklen bewertet. Das bedeutet, dass der Signalunterschied $(a_i - a_{(i-1)})$ über mehrere Zyklen gemittelt wird, was äquivalent zur Ermittlung einer Differenz $(a_i - a_{(i-n)})$ ist. Des Weiteren wird der Gradient G in Relation zum erreichten Beschleunigungsniveau gesetzt. Das bedeutet, dass ein Plateau und damit ein Wechsel der Deformationsphase erkannt wird, wenn der Anstieg des Signalverlaufs K10 der letzten n Zyklen einen vom erreichten Beschleunigungsniveau abhängigen Schwellwert unterschreitet. Ein solcher relativer Gradient ist damit beispielsweise durch die zweite Gleichung (G2) gegeben.

$$NormGrad_i = \frac{a_i - a_{i-n}}{(a_i + a_{i-n})\big/2} \qquad\qquad (G2)$$

Hierbei wird der Signalanstieg über n Zyklen in Relation zum Mittelwert der aktuellen Beschleunigung oder der Beschleunigung vor n Zyklen gesetzt. Alternativ kann auch auf den echten Mittelwert der letzten n Zyklen normiert werden, wie die dritte Gleichung (G3) zeigt.

$$NormGrad_i = \frac{a_i - a_{i-n}}{\sum a_j \big/ (n+1)} \qquad\qquad (G3)$$

Hierbei kann der Faktor $1/(n+1)$ der Einfachheit halber weggelassen werden. Alternativ kann auch auf die Normierung mit der mittleren Beschleunigung verzichtet werden. Ein Plateau kann demnach detektiert werden, wenn der (normierte) Gradient gemäß der neunten Ungleichung (U9) einen gewissen Schwellwert unterschreitet.

$$NormGrad < Thd \qquad\qquad\qquad (U9)$$

Zur Vermeidung der Division kann anstelle der Normierung des Gradienten auch der nicht-normierte Gradient gegen eine Schwelle verglichen wird, die mit der mittleren Beschleunigung der betrachteten Werte skaliert wird, oder noch allgemeiner eine Funktion dieser Werte ist, wie aus der zehnten Ungleichung (U10) ersichtlich ist.

$$Grad_i = a_i - a_{i-n} < Thd*(a_i + a_{i-n}) = F(\{a_i,\ldots,a_{i-n}\}) \qquad (U10)$$

Noch allgemeiner kann der Schwellwert auch basierend auf allen Beschleunigungswerten seit Ereignisbeginn sowie daraus abgeleiteten Merkmalen, wie beispielsweise dem Geschwindigkeitsabbau Dv variiert werden.

Die vierte Erkennung hat insbesondere den Vorteil, dass für die Erkennung kein Signaleinbruch erforderlich ist, sondern auch bei leicht ansteigenden Signalen noch eine Erkennung möglich ist. Dies ist bei der ersten zweite Erkennungsmethode nicht möglich und bei der dritten Erkennungsmethode nur bei ausreichend kleinem Filterunterschied.

Für alle hier beschriebenen Erkennungsmethoden ist es sinnvoll, einen Niveauwechsel im Crashverlauf nur dann zu detektieren, wenn ein gewisses Mindestbeschleunigungsniveau $a_{min}$ überschritten wurde. Die hier beschriebenen Methoden zur Erkennung eines Wechsels von Deformationsphasen können in Verbindung mit der rückwirkenden Merkmalsberechnung aus dem bisherigen Signal- bzw. Beschleunigungsverlauf eingesetzt werden. Bei Crashs gegen ein weiches Hindernis ist das Ende der ersten Deformationsphase aber gerade durch den Wechsel von Eigendeformation auf gegnerische Deformation charakterisiert, welcher mit den oben beschriebenen Erkennungen ermöglicht wird.

Die beschriebenen Methoden zur Erkennung des Wechsels von Deformationsphasen wurden speziell zur Erkennung weicher Crashs optimiert. Trotzdem werden diese Bedingungen auch von harten Crashs erfüllt, welche einfach über einen Signaleinbruch erkannt werden können. Da bei einem harten Crash aber nur die Eigenstruktur deformiert wird, liegt das ermittelte Kraftniveau auf einem definierten hohen Wert. Bei einem weichen Crash mit einem Eindringen in das gegnerische Fahrzeug wird dieses hohe Kraftniveau dagegen nicht erreicht. Damit kann durch eine einfache zusätzliche Abfrage des erreichten Kraftniveaus $a_{max}$ zwischen einem harten und weichen Crash unterschieden werden. Ein harter Crash liegt vor, falls ein Kraftniveauwechsel erkannt wird und das Kraftniveau bzw. das Maximum $a_{max}$ oberhalb eines ersten Schwellwertes liegt. Ein weicher Crash liegt vor, falls ein Kraftniveauwechsel erkannt wird und das Kraftniveau bzw. das Maximum $a_{max}$ unterhalb eines zweiten Schwellwertes liegt. Hierbei kann der erste Schwellwert dem zweiten Schwellwert entsprechen.

Diese Crashtypunterscheidung hart/weich kann nun unmittelbar oder mittelbar, beispielsweise in Kombination mit anderen Erkennungen, verwendet werden, um die Auslöseschwellen des Hauptalgorithmus im Hinblick auf weiche Crashs anpassen zu können. Neben einer Schwellenanpassung unter Beibehaltung der verwendeten Signalmerkmale ist auch denkbar, bei Erkennung eines weichen Crashs auf separate "Auslösepfade" für weiche Crashs umzuschalten, in denen andere Signalmerkmale oder Merkmalskombinationen gegen Schwellwerte verglichen werden.

**Patentansprüche**

1. Vorrichtung zur Ansteuerung von Personenschutzmitteln in einem Fahrzeug mit mindestens einer Sensoreinheit (20, 22, 24, 26, 28), welche mindestens eine physikalische Größe erfasst, und einer Auswerte- und Steuereinheit (10), welche aus der mindestens einen erfassten physikalischen Größe mindestens einen aufprallkennzeichnenden Signalverlauf (Acc) erzeugt, wobei die Auswerte- und Steuereinheit (10) in Abhängigkeit eines Energieabbauverhaltens des Fahrzeugs (1) im erzeugten Signalverlauf (K1, K4 bis K10) mindestens eine zeitliche Phase (P1, P2) bestimmt und zur Crashklassifizierung und zur Auslöseentscheidung für Personenschutzmittel (30) auswertet, wobei die Auswerte- und Steuereinheit (10) mindestens einen ersten charakteristischen Zeitpunkt (tp) im Signalverlauf (K1, K4 bis K10) bestimmt, welcher das Ende einer ersten zeitlichen Phase (P1) repräsentiert, und ausgehend von dem mindestens einen ersten charakteristischen Zeitpunkt (tp) rückwirkend mindestens ein Merkmal ($a_{max}$, $a_{min}$, A, A1, A2, Dv1, Dv2, tp-t1, t2-t1, G) des Energieabbaus berechnet, wobei die Auswerte- und Steuereinheit (10) die Crashklassifizierung und die Auslöseentscheidung für Personenschutzmittel (30) in Abhängigkeit des mindestens einen rückwirkend berechneten Merkmals ($a_{max}$, $a_{min}$, A, A1, A2, Dv1, Dv2, tp-t1, t2-t1, G) vornimmt,
**dadurch gekennzeichnet, dass**
das Merkmal des Energieabbaus ein Einbruch in Relation zum erreichten lokalen maximalen Kraftniveau ($a_{max}$) ist.

2. Vorrichtung nach Anspruch 1, **dadurch gekennzeichnet, dass** die erste zeitliche Phase (P1) des Energieabbauverhaltens von äußeren Knautschzonenelementen des Fahrzeugs (1) bestimmt ist.

3. Vorrichtung nach Anspruch 1 oder 2, **dadurch gekennzeichnet, dass** die Auswerte- und Steuereinheit (10) einen lokalen Maximalwert ($a_{max}$) im Signalverlauf ermittelt.

4. Vorrichtung nach Anspruch 3, **dadurch gekennzeichnet, dass** die Auswerte- und Steuereinheit (10) den lokalen Maximalwert ($a_{max}$) im Signalverlauf mit mindestens einem Schwellwert vergleicht und durch den Vergleich einen harten Crash oder einen weichen Crash erkennt.

5. Vorrichtung nach Anspruch 3 oder 4, **dadurch gekennzeichnet, dass** die Auswerte- und Steuereinheit (10) den ersten charakteristischen Zeitpunkt (tp) im Signalverlauf (K1, K4, K5, K6) in Abhängigkeit des lokalen Maximalwerts ($a_{max}$) bestimmt.

6. Vorrichtung nach Anspruch 5, **dadurch gekennzeichnet, dass** die Auswerte- und Steuereinheit (10) den ersten charakteristischen Zeitpunkt (tp) über einen Signalrückgang oder einen integrierten Signalrückgang absolut oder in Bezug auf den lokalen Maximalwert ($a_{max}$) bestimmt.

7. Vorrichtung nach einem der Ansprüche 1 bis 6, **dadurch gekennzeichnet, dass** die Auswerte- und Steuereinheit (10) rückwirkend ein maximal erreichtes Kraftniveau ($a_{max}$) innerhalb der ersten Phase (P1) und/oder eine innerhalb der ersten Phase (P1) abgebaute Geschwindigkeit (Dv1) und/oder Integrale über Teilbereiche des Signalverlaufs (K1, K4 bis K10) der ersten Phase (P1) und/oder eine zeitliche Dauer (t1-tp) der ersten Phase (P1) und/oder eine Anstiegszeit (t2 - t1) des Signalverlaufs (K1, K4, K5) und/oder Gradienten (G) eines Signalverlaufs (K10) der ersten Phase (P1) berechnet.

8.  Vorrichtung nach einem der Ansprüche 1 bis 7, **dadurch gekennzeichnet, dass** die Auswerte- und Steuereinheit (10) die rückwirkend für die erste Phase (P1) berechneten Merkmale ($a_{max}$, $a_{min}$, A, A1, A2, Dv1, tp-t1, t2-t1, G) und/oder Zwischengrößen (a1, a2, Thd($a_{max}$, t) zur weiteren Auswertung logisch und/oder mathematisch miteinander kombiniert und/oder verknüpft.

9.  Vorrichtung nach einem der Ansprüche 1 bis 8, **dadurch gekennzeichnet, dass** die Auswerte- und Steuereinheit (10) über einen zweiten charakteristischen Zeitpunkt im Signalverlauf (K1, K4 bis K10), welcher das Ende der zweiten zeitlichen Phase (P2) repräsentiert, eine an die ersten Phase (P1) anschließende zweite Phase (P2) definiert.

10. Vorrichtung nach Anspruch 9, **dadurch gekennzeichnet, dass** die Auswerte- und Steuereinheit (10) den zweiten charakteristischen Zeitpunkt im Signalverlauf (K1, K4 bis K10) in Abhängigkeit von einem nach dem ersten charakteristischen Zeitpunkt (tp) auftretenden lokalen Maximalwert und/oder über unterschiedliche Filterkurven und/oder mittels einer Gradientenberechnung und/oder über eine feste Zeitspanne ab dem ersten charakteristischen Zeitpunkt (tp) und/oder einen festen Geschwindigkeitsabbau (Dv2) ab dem ersten charakteristischen Zeitpunkt (tp) und/oder einen vorgegebenen Gesamtgeschwindigkeitsabbau (Dv) bestimmt.

11. Vorrichtung nach Anspruch 9 oder 10, **dadurch gekennzeichnet, dass** die Auswerte- und Steuereinheit (10) rückwirkend eine innerhalb der zweiten zeitlichen Phase (P2) abgebaute Geschwindigkeit (Dv2) und/oder ein minimales Kraftniveau (a_min) innerhalb der zweiten zeitlichen Phase (P2) berechnet.

12. Vorrichtung nach einem der Ansprüche 9 bis 11, **dadurch gekennzeichnet, dass** die Auswerte- und Steuereinheit (10) die rückwirkend für die erste und zweite Phase (P1, P2) berechneten Merkmale ($a_{max}$, $a_{min}$, A, A1, A2, Dv1, Dv2, tp-t1, t2-t1, G) und/oder Zwischengrößen (a1, a2, Thd($a_{max}$, t) zur weiteren Auswertung logisch und/oder mathematisch miteinander kombiniert und/oder verknüpft.

## Claims

1.  Device for actuating personal protection means in a vehicle having at least one sensor unit (20, 22, 24, 26, 28) which detects at least one physical variable, and an evaluation and control unit (10) which generates at least one impact-characterizing signal profile (Acc) from the at least one detected physical variable, wherein the evaluation and control unit (10) determines at least one time phase (P1, P2) as a function of an energy reduction behaviour of the vehicle (1) in the generated signal profile (K1, K4 to K10), and evaluates said time phase (P1, P2) in order to classify the crash and to decide about the triggering for personal protection means (30), wherein the evaluation and control unit (10) determines at least a first characteristic time (tp) in the signal profile (K1, K4 to K10) which represents the end of a first time phase (P1), and calculates at least one feature ($a_{max}$, $a_{min}$, A, A1, A2, Dv1, Dv2, tp-t1, t2-t1, G) of the energy reduction retroactively starting from the at least one first characteristic time (tp), wherein the evaluation and control unit (10) carries out the classification of the crash and the decision about triggering for personal protection means (30) as a function of the at least one retroactively calculated feature ($a_{max}$, $a_{min}$, A, A1, A2, Dv1, Dv2, tp-t1, t2-t1, G),
    **characterized in that**
    the feature of the energy reduction is a dip in relation to the calculated local maximum force level ($a_{max}$).

2.  Device according to Claim 1, **characterized in that** the first time phase (P1) of the energy reduction behaviour is determined by external crush zone elements of the vehicle (1).

3.  Device according to Claim 1 or 2, **characterized in that** the evaluation and control unit (10) determines a local maximum value ($a_{max}$) in the signal profile.

4.  Device according to Claim 3, **characterized in that** the evaluation and control unit (10) compares the local maximum value (amax) in the signal profile with at least one threshold value and detects a hard crash or a soft crash by means of the comparison.

5. Device according to Claim 3 or 4, **characterized in that** the evaluation and control unit (10) determines the first characteristic time (tp) in the signal profile (K1, K4, K5, K6) as a function of the local maximum value ($a_{max}$).

6. Device according to Claim 5, **characterized in that** the evaluation and control unit (10) determines the first characteristic time (tp) by means of a drop in the signal or an integrated drop in the signal absolutely or with respect to the local maximum value ($a_{max}$).

7. Device according to one of Claims 1 to 6, **characterized in that** the evaluation and control unit (10) calculates retroactively a maximum achieved force level ($a_{max}$) within the first phase (P1) and/or a speed (Dv1) which is reduced within the first phase (P1) and/or intervals over portions of the signal profile (K1, K4 to K10) of the first phase (P1) and/or a duration (t1-tp) of the first phase (P1) and/or a rise time (t2-t1) of the signal profile (K1, K4, K5) and/or gradients (G) of a signal profile (K10) of the first phase (P1).

8. Device according to one of Claims 1 to 7, **characterized in that** the evaluation and control unit (10) combines and/or links logically and/or mathematically with one another the features ($a_{max}$, $a_{min}$, A, A1, A2, Dv1, tp-t1, t2-t1, G) which are calculated retroactively for the first phase (P1) and/or intermediate variables (a1, a2, Thd($a_{max}$, t) for further evaluation.

9. Device according to one of Claims 1 to 8, **characterized in that** the evaluation and control unit (10) defines a second phase (P2) adjoining the first phase (P1) by means of a second characteristic time in the signal profile (K1, K4 to K10) which represents the end of the second time phase (P2).

10. Device according to Claim 9, **characterized in that** the evaluation and control unit (10) determines the second characteristic time in the signal profile (K1, K4 to K10) as a function of a local maximum value occurring after the first characteristic time (tp) and/or by means of different filter curves and/or by means of a gradient calculation and/or by means of a fixed time period starting from the first characteristic time (tp) and/or a fixed speed reduction (Dv2) starting from the first characteristic time (tp) and/or a predefined total speed reduction (Dv).

11. Device according to Claim 9 or 10, **characterized in that** the evaluation and control unit (10) calculates retroactively a speed (Dv2) which is reduced within the second time phase (P2) and/or a minimum force level (a_min) within the second time phase (P2).

12. Device according to one of Claims 9 to 11, **characterized in that** the evaluation and control unit (10) combines and/or links logically and/or mathematically with one another the features ($a_{max}$, $a_{min}$, A, A1, A2, Dv1, Dv2, tp-t1, t2-tl, G) which are calculated retroactively for the first and second phase (P1, P2) and/or intermediate variables (a1, a2, Thd($a_{max}$, t) for further evaluation.

**Revendications**

1. Dispositif de commande de moyens de protection individuelle dans un véhicule avec au moins une unité de capteur (20, 22, 24, 26, 28), qui détecte au moins une grandeur physique, et une unité d'évaluation et de commande (10), qui produit à partir de ladite au moins une grandeur physique détectée au moins une courbe de signal caractérisant la collision (Acc), dans lequel l'unité d'évaluation de commande (10) détermine, en fonction d'un comportement de dégradation d'énergie du véhicule (1), dans la courbe de signal produite (K1, K4 à K10), au moins une phase temporelle (P1, P2) et l'évalue pour la classification de la collision et pour la décision de déclenchement de moyens de protection individuelle (30), dans lequel l'unité d'évaluation et de commande (10) détermine au moins un premier instant caractéristique (tp) dans la courbe de signal (K1, K4 à K10), qui représente la fin de la première phase temporelle (P1), et calcule rétroactivement à partir dudit au moins un premier instant caractéristique (tp) au moins une caractéristique ($a_{max}$, $a_{min}$, A, A1, A2, Dv1, Dv2, tp-t1, t2-t1, G) de la dégradation d'énergie, dans lequel l'unité d'évaluation et de commande (10) procède à la classification de la collision et à la décision de déclenchement des moyens de protection individuelle (30) en fonction de ladite au moins une caractéristique calculée rétroactivement ($a_{max}$, $a_{min}$, A, A1, A2, Dv1, Dv2, tp-t1, t2-t1, G), **caractérisé en ce que** la caractéristique de la dégradation d'énergie est un effondrement en relation avec le niveau de force maximal local atteint ($a_{max}$).

2. Dispositif selon la revendication 1, **caractérisé en ce que** la première phase temporelle (P1) du comportement de dégradation d'énergie est déterminée par des éléments de zones de déformation extérieurs du véhicule (1).

**3.** Dispositif selon une revendication 1 ou 2, **caractérisé en ce que** l'unité d'évaluation et de commande (10) détermine une valeur maximale locale ($a_{max}$) dans la courbe de signal.

**4.** Dispositif selon la revendication 3, **caractérisé en ce que** l'unité d'évaluation et de commande (10) compare la valeur maximale locale ($a_{max}$) dans la courbe de signal avec au moins une valeur de seuil et identifie par la comparaison une collision grave ou une collision légère.

**5.** Dispositif selon une revendication 3 ou 4, **caractérisé en ce que** l'unité d'évaluation et de commande (10) détermine le premier instant caractéristique (tp) dans la courbe de signal (K1, K4, K5, K6) en fonction de la valeur maximale locale ($a_{max}$).

**6.** Dispositif selon la revendication 5, **caractérisé en ce que** l'unité d'évaluation et de commande (10) détermine le premier instant caractéristique (tp) par une baisse du signal ou une baisse de signal intégrée de manière absolue ou par rapport à la valeur maximale locale ($a_{max}$).

**7.** Dispositif selon l'une quelconque des revendications 1 à 6, **caractérisé en ce que** l'unité d'évaluation et de commande (10) calcule rétroactivement un niveau de force maximal ($a_{max}$) atteint à l'intérieur de la première phase (P1) et/ou une vitesse (Dv1) dégradée à l'intérieur de la première phase (P1) et/ou l'intégrale sur des zones partielles de la courbe de signal (K1, K4 à K10) de la première phase (P1) et/ou une durée temporelle (t1-tp) de la première phase (P1) et/ou un temps de croissance (t2-t1) de la courbe de signal (K1, K4, K5) et/ou des gradients (G) d'une courbe de signal (K10) de la première phase (P1).

**8.** Dispositif selon l'une quelconque des revendications 1 à 7, **caractérisé en ce que** l'unité d'évaluation et de commande (10) combine et/ou relie logiquement et/ou mathématiquement l'une à l'autre rétroactivement des caractéristiques ($a_{max}$, $a_{min}$, A, A1, A2, Dv1, tp-t1, t2-t1, G) calculées pour la première phase (P1) et/ou des grandeurs intermédiaires (a1, a2, Thd($a_{max}$,t)) pour une nouvelle évaluation.

**9.** Dispositif selon l'une quelconque des revendications 1 à 8, **caractérisé en ce que** l'unité d'évaluation et de commande (10) définit une deuxième phase (P2) se raccordant à la première phase (P1), par un deuxième instant caractéristique dans la courbe de signal (K1, K4 à K10), qui représente la fin de la deuxième phase temporelle (P2).

**10.** Dispositif selon la revendication 9, **caractérisé en ce que** l'unité d'évaluation et de commande (10) détermine le deuxième instant caractéristique dans la courbe de signal (K1, K4 à K10) en fonction d'une valeur maximale locale se produisant après le premier instant caractéristique (tp) et/ou par différentes courbes de filtre et/ou au moyen d'un calcul de gradient et/ou sur un laps de temps fixe à partir du premier instant caractéristique (tp) et/ou une dégradation de vitesse fixe (Dv2) à partir du premier instant caractéristique (tp) et/ou une dégradation de vitesse totale prédéterminée (Dv).

**11.** Dispositif selon une revendication 9 ou 10, **caractérisé en ce que** l'unité d'évaluation et de commande (10) calcule rétroactivement une vitesse (Dv2) dégradée à l'intérieur de la deuxième phase temporelle (P2) et/ou un niveau de force minimal ($a_{\_min}$) à l'intérieur de la deuxième phase temporelle (P2).

**12.** Dispositif selon l'une quelconque des revendications 9 à 11, **caractérisé en ce que** l'unité d'évaluation et de commande (10) combine et/ou relie logiquement et/ou mathématiquement l'une à l'autre rétroactivement des caractéristiques ($a_{max}$, $a_{min}$, A, A1, A2, Dv1, Dv2, tp-t1, t2-t1, G) calculées pour la première et la deuxième phase (P1, P2) et/ou des grandeurs intermédiaires (a1, a2, Thd ($a_{max}$, t)) pour une nouvelle évaluation.

Fig. 1

Fig. 2

Fig. 3

Fig. 4

Fig. 5

Fig. 6

Fig. 7

Fig. 8

Fig. 9

Acc

K8

K9

P1

P2

t0

tp

t

**Fig. 10**

Acc

K10

$a_i$

G

$a_{i-n}$

$a_{min}$

P1

P2

t0

i-n

i,tp

t

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006038348 A1
- WO 03101786 A1
- DE 102010003333 A1
- DE 102004029373 A1
- DE 102005024319 B3
- US 6219606 B1
- US 6430489 B1